# EUROPEAN PATENT APPLICATION

(11) **EP 4 331 358 A1**
(43) Date of publication of application: **06.03.2024**
(21) Application number: 23192342.6
(22) Date of filing: 21.08.2023
(51) Int. Cl.: A01M 23/00, A01M 23/16, A01M 23/18, A01M 25/00, A22B 3/00

(54) **A METHOD OF KILLING A SMALL ANIMAL AND AN ANIMAL TRAP**

(30) Priority: 29.08.2022 NL 2032880
(71) Applicant: Anoxia B.V., 3882 TN Putten (NL)
(72) Inventor: VAN MIL, Michiel Geert, Den Haag (NL); GORTMANS, Mike Ivan Gerwin, Putten (NL)
(74) Representative: Dogio Patents B.V.

(57) **Abstract**

A method of killing a small animal, such as a rodent, wherein the method comprises the steps of:
trapping the animal in a housing of an animal trap;
detecting that the animal is trapped in the trap housing;
in reaction to detecting that the animal is trapped in the trap housing filling at least part of the trap housing with a gas for stunning and killing the animal inside the housing;
wherein the housing is at least partially filled with said gas by supplying a foam into the housing in which the gas is contained;
wherein the foam is generated by a foam generator comprising:
a housing having a circumferential side wall, a first end wall and a second end wall, wherein the second end wall is at least partially formed by a perforated plate comprising a multitude of through-holes;
a spray nozzle being directed towards the second end wall from the direction of the first end wall, and an inlet for an aqueous detergent solution which is connected to said spray nozzle;
a gas outlet for supplying said gas into the housing of the foam generator, and an inlet for said gas which is connected to said gas outlet;

wherein said foam is generated by spraying said aqueous detergent solution through said nozzle against said second end wall with said perforated plate while supplying said gas through said gas outlet,
thereby forming bubbles comprising said gas at the outside of said perforated plate.

## Description

The present invention relates to a method of killing a small animal, such as a rodent, wherein the method comprises the steps of:
trapping the animal in a housing of an animal trap;
detecting that the animal is trapped in the trap housing;
in reaction to detecting that the animal is trapped in the trap housing filling at least part of the trap housing with a gas for stunning and killing the animal inside the housing.

Such a method is disclosed in US-A-4653221. In the known method carbon dioxide or nitrogen is injected into the trap housing from a gas supply tank, cylinder or cartridge by a gas injector.

Legally, animal welfare is an important criterium. However, animals seen as pests, such as rodents like rats and mice, have no or scant legal welfare protection. Often, methods are being used like mechanical traps and poisonous baits that kill these animals with prolonged suffering. The objective of the present invention is to provide an effective and/or simple method and device for killing small animals with little suffering.

To this end, a method according to the preamble is characterized in that the housing is at least partially filled with said gas by supplying a foam into the housing in which the gas is contained; wherein the foam is generated by a foam generator comprising:
a housing having a circumferential side wall, a first end wall and a second end wall, wherein the second end wall is at least partially formed by a perforated plate comprising a multitude of through-holes;
a spray nozzle being directed towards the second end wall from the direction of the first end wall, and an inlet for an aqueous detergent solution which is connected to said spray nozzle;
a gas outlet for supplying said gas into the housing of the foam generator, and an inlet for said gas which is connected to said gas outlet;
wherein said foam is generated by spraying said aqueous detergent solution through said nozzle against said second end wall with said perforated plate while supplying said gas through said gas outlet, thereby forming bubbles comprising said gas at the outside of said perforated plate.

To reduce discomfort for the animals, it is known to use high expansion foam for stunning or killing animals. A high expansion foam generator according to the state of the art is e.g. known from GB-A-2492480. A problem with this known method is that the foam generated comprises a too large fraction of small bubbles, which may lead to asphyxiation, which is very undesirable from an animal welfare point of view. This foam has a relatively white appearance (low transparency) due to the presence of a relatively high volume fraction of small bubbles. To further reduce the discomfort of animals, a revised foam generator has been introduced in EP-A-3473104, in which the pre-foam mesh was removed and gas and liquid detergent loading rates were determined to guarantee a transparent foam with bubbles of about 15 mm diameter and more, without small bubbles that might asphyxiate animals. The foam generators described in this previous art have a capacity of 600-12000 litres of high-expansion foam per minute and are used for euthanizing single farm animals of considerable weight (e.g. sows of 300 kg) or groups of a high number of smaller farm animals. The foam generators described in this previous art use an inert or stunning gas with a constant pressure during foaming from high pressure cylinders or liquid nitrogen. The aqueous detergent solution is sprayed through a liquid spray nozzle by mechanical pumps.

With the small sized solution of the current invention a similar result, namely a constant bubble size of about 10-12 mm throughout the foaming process is achieved, while the foam generator has a capacity of about 1/100 as compared to the foam generators in previous art, at a flow of 5-10 l/min, allowing for filling a small confined place quickly.

Preferably, said nozzle is a full cone spray nozzle.

Preferably, the nozzle is of a combined gas/liquid type, wherein said gas outlet is connected to the opening of the nozzle, and the inlet for the aqueous detergent is connected to the nozzle via a venturi inlet, such that the aqueous detergent solution is mixed into the gas stream through suction.

The combined liquid/gas nozzle eliminates the need of a gas diffusor and a mechanical pump.

Preferably, the rate Rd of the aqueous detergent solution is between 0.003 m³ and 0.01 m per m of the total open surface area Aₕ of the through-holes in the perforated plate per second.

Preferably, the rate Rg of the gas is between 200 to 600 times the rate Rd of the aqueous detergent solution, at least at the start of supplying said gas into the housing.

Preferably, the rate Rg of the gas is between 0.2 m³ and 0.5 m³ per m2 of the total open surface area Aₕ of the through-holes in the perforated plate per second, at least at the start of supplying said gas into the housing.

Preferably, said through holes have a first cross sectional diameter D1 between 0.2 and 2 mm, preferably between 0.2 and 1 mm, and a second cross sectional diameter D2 perpendicular to D1 between 0.2 and 2 mm, preferably between 0.2 and 1 mm.

The through holes may be round, square shaped or any other shape, preferably said through holes are square.

Preferably, said through holes have a surface area of less than 1 mm2.

Preferably, the perforated plate has a part which extends vertically above a horizontal line, which part does not have said through holes, and which part forms between 10% and 75%, preferably between 30% and 40%, of the total surface area of the end wall.

The present invention preferably uses a flat perforated plate with an closed upper segment, to generate a water film even with fine droplets. Such a flat plate is cheaper to produce than the conical plates used in prior art devices. The upper solid part of the plate catches the fine droplets that then flow down to build a water film on the perforated plate so that foam production can start. When the droplets get coarser, they hit the lower part of the plate to feed the water film so that foam production continues until a gas pressure of about 0,5 bar.

Preferably, the centre of the spray nozzle is aimed to hit the perforated plate at a location vertically above a horizontal line through the vertical centre of the perforated plate.

Preferably, the gas is provided to the gas inlet from a pressurized gas cartridge.

In case a small gas cartridge is used the droplets produced will be a fine mist initially, but when pressure drops during the procedure, the spray will get coarser as less energy is available in the gas flow.

Preferably, the pressure of the gas is at least 0.5 bar, preferably at least 3 bar, more preferably at least 6 bar, said pressure being present at least at the start of supplying said gas into the housing.

Preferably said gas pressure is not larger than 8 bar.

Preferably, the aqeous detergent solution is provided to the inlet from a liquid container.

Preferably the circumferential wall of the housing of the foam generator is a cylinder or a square tube.

According to a favourable embodiment, the foam inside the container is destructed by a jet of an inert or stunning gas from the main cartridge or from a second cartridge when the procedure is competed. This jet reduces the risk of remaining air pockets in corners of the container and may also clean a camera screen when such is used for animal recognition.

Preferably, wherein said step of trapping an animal in the housing of the animal trap is preceded by receiving said animal in said housing and detecting if said animal is a species targeted for killing by means of one or more detectors, and said step of trapping the animal in the housing is only performed if said animal is a species targeted for killing.

Finally, the present invention relates to a animal trap for killing a small animal, such as a rodent, comprising:
a trap housing;
means for filling at least part of the trap housing with a gas for stunning and killing the animal inside the housing;
wherein the animal trap further comprises a foam generator for generating foam containing said gas and supplying said foam into the trap housing, said foam generator comprising:
   a housing having a circumferential side wall, a first end wall and a second end wall, wherein the second end wall is at least partially formed by a perforated plate comprising a multitude of through-holes;
   a spray nozzle being directed towards the second end wall from the direction of the first end wall, and an inlet for an aqueous detergent solution which is connected to said spray nozzle;
   a gas outlet for supplying said gas into the housing of the foam generator, and an inlet for said gas which is connected to said gas outlet.

The present invention will now be illustrated with reference to the drawing where
Fig. 1 is a perspective view of a rat trap;

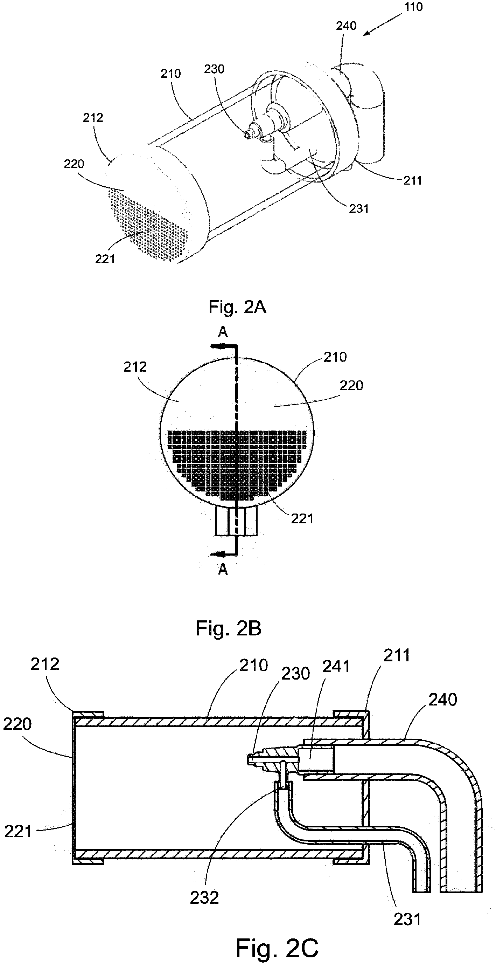

Fig. 2A is a perspective view of a foam generator for use in the rat trap;
Fig. 2B is a front view of the foam generator; and
Fig. 2C is a cross section of the foam generator along the line A-A in Fig 2B.

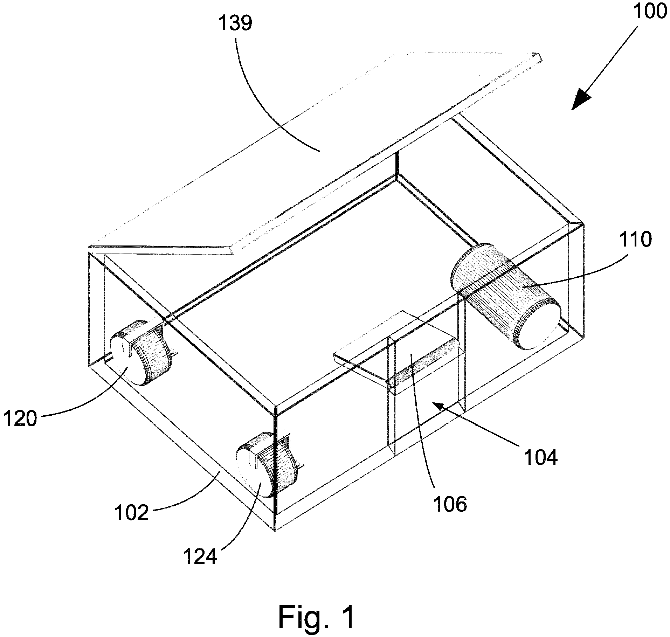

Fig. 1 shows an embodiment of a rat trap 100 as an example of an animal trap. The rat trap 100 comprises a housing 102 with an opening 104 allowing passage of an animal, such as a rat, into the housing 102 and out of the housing 102. A hatch 106 as a closing member is provided for selectively restricting and allowing passage of an animal through the opening 104. Preferably the housing comprises two openings 104 and hatches 106, as rats are not likely to enter a room without an exit. A bait tray (not shown) is also present in the housing. The housing 102 comprises a lid 139 which allows access into the housing 102, for example for cleaning or maintenance. The animal trap 100 further comprises a sensor module 120 for sensing an animal being present in the trap. The animal trap 100 also comprises a controller 124, connected to the sensor module 120 for receiving sensor signals from the sensor module 120. A foam dispenser in the form of a foam generator 110 is present inside the housing 102, which foam dispenser is operated by the controller 124 to dispense foam upon sensing that a rat is present in the trap 100, as described in more detail below.

The micro foam generator 110 comprises a housing having a cylindrical side wall 210 (diameter 45 mm; length 60 mm), a first end wall 211 and a second end wall 212, defining a confined space that is substantially closed for gas and/or foam. The second end wall 212 is provided with a round, flat perforated plate 220 having a plurality of square through-holes 221 of 1,5x1,5 mm with 0,2 mesh. The ratio of the surface area of the through-holes and the total surface area of the bubble-generating plate is in the range of 0.1 - 0.3. The plate 220 is fitting closely to the cylinder.

Inside the housing a full cone jet spray nozzle 230 (CBIMJ from Ikeuchi, nominal spray angle of 20° at 10 cm at gas pressure 3 bar) is provided. The outlet of the nozzle 230 faces the perforated plate 220 at a height of 2/3 of its diameter. At the first end wall 211 there is a detergent inlet 231 for liquid detergent solution in communication with a detergent outlet 232 in the nozzle 230. At the first end wall 211 there is also a gas inlet 240 connected via a gas outlet 241 to the spray nozzle 230. The nozzle is of a combined gas/liquid type, wherein said gas outlet 241 is connected to the opening of the nozzle 230, and the inlet 231 for the aqueous detergent is connected to the nozzle 230 via a venturi inlet, such that the aqueous detergent solution is mixed into the gas stream through suction.

The foam generator 110 will in general be mounted horizontally in the trap housing but can be mounted vertically downwards as well.

Foam is generated by providing the foam generator with gas from a gas supply unit (not shown), copmprising a gas cartridge connected to a buffer chamber for delivering between 6 and 8 bar initial pressure, being connected to the gas inlet 240, and foam aqueous detergent from a liquid container (not shown) being connected to the detergent inlet 231. The gas may be nitrogen. The aqueous detergent may be a 3% (vol./vol.) in water solution of Anoxia Mild^{™} detergent.

When operated at a gas pressure of 6 bar the droplets are a fine mist, turning to coarser droplets at lower gas pressure. The droplets are 10 µm at 6 bar and 100 µm at 2 bar.

Foam production starts immediately and continues until pressure drops to 0,5 bar or lower. The bubble size of the foam generated ranges in diameter from 10 to 12 mm throughout foaming and does not change when pressure drops. This size is sufficient to prevent inhalation of liquid by the animal as these bubbles are much larger than its nostrils. The transparency of the foam, determined visually using a Secchi disk, amounts to at least 30 cm.

The invention has thus been described by means of preferred embodiments. It is to be understood, however, that this disclosure is merely illustrative. Various details of the structure and function were presented, but changes made therein, to the full extent extended by the general meaning of the terms in which the appended claims are expressed, are understood to be within the principle of the present invention. The description and drawings shall be used to interpret the claims. The claims should not be interpreted as meaning that the extent of the protection sought is to be understood as that defined by the strict, literal meaning of the wording used in the claims, the description and drawings being employed only for the purpose of resolving an ambiguity found in the claims. For the purpose of determining the extent of protection sought by the claims, due account shall be taken of any element which is equivalent to an element specified therein. An element is to be considered equivalent to an element specified in the claims at least if said element performs substantially the same function in substantially the same way to yield substantially the same result as the element specified in the claims.

## Claims

1. A method of killing a small animal, such as a rodent, wherein the method comprises the steps of:
trapping the animal in a housing of an animal trap;
detecting that the animal is trapped in the trap housing;
in reaction to detecting that the animal is trapped in the trap housing filling at least part of the trap housing with a gas for stunning and killing the animal inside the housing;
**characterized in that** the housing is at least partially filled with said gas by supplying a foam into the housing in which the gas is contained;
wherein the foam is generated by a foam generator comprising:
a housing having a circumferential side wall, a first end wall and a second end wall, wherein the second end wall is at least partially formed by a perforated plate comprising a multitude of through-holes;
a spray nozzle being directed towards the second end wall from the direction of the first end wall, and an inlet for an aqueous detergent solution which is connected to said spray nozzle;
a gas outlet for supplying said gas into the housing of the foam generator, and an inlet for said gas which is connected to said gas outlet;
wherein said foam is generated by spraying said aqueous detergent solution through said nozzle against said second end wall with said perforated plate while supplying said gas through said gas outlet,
thereby forming bubbles comprising said gas at the outside of said perforated plate.

2. The method according to claim 1, wherein said nozzle is a full cone spray nozzle.

3. The method according to claim 1 or 2, wherein the nozzle is of a combined gas/liquid type, wherein said gas outlet is connected to the opening of the nozzle, and the inlet for the aqueous detergent is connected to the nozzle via a venturi inlet, such that the aqueous detergent solution is mixed into the gas stream through suction.

4. The method according to any of the preceding claims, wherein the rate Rd of the aqueous detergent solution is between 0.003 m and 0.01 m per m of the total open surface area Aₕ of the through-holes in the perforated plate per second.

5. The method according to any of the preceding claims, wherein the rate Rg of the gas is between 200 to 600 times the rate Rd of the aqueous detergent solution, at least at the start of supplying said gas into the housing.

6. The method according to any of the preceding claims, wherein the rate Rg of the gas is between 0.2 m³ and 0.5 m per m2 of the total open surface area Aₕ of the through-holes in the perforated plate per second, at least at the start of supplying said gas into the housing.

7. The method according to any of the preceding claims, wherein said through holes have a first cross sectional diameter D1 between 0.2 and 2 mm, preferably between 0.2 and 1 mm, and a second cross sectional diameter D2 perpendicular to D1 between 0.2 and 2 mm, preferably between 0.2 and 1 mm.

8. The method according to any of the preceding claims, wherein said through holes have a surface area of less than 1 mm2.

9. The method according to any of the preceding claims, wherein the perforated plate has a part which extends vertically above a horizontal line, which part does not have said through holes, and which part forms between 10% and 75%, preferably between 30% and 40%, of the total surface area of the end wall.

10. The method according to any of the preceding claims, wherein the centre of the spray nozzle is aimed to hit the perforated plate at a location vertically above a horizontal line through the vertical centre of the perforated plate.

11. The method according to any of the preceding claims, wherein the gas is provided to the gas inlet from a pressurized gas cartridge.

12. The method according to any of the preceding claims, wherein the pressure of the gas is at least 0.5 bar, preferably at least 3 bar, more preferably at least 6 bar, said pressure being present at least at the start of supplying said gas into the housing.

13. The method according to any of the preceding claims, wherein the aqeous detergent solution is provided to the inlet from a liquid container.

14. The method according to any of the preceding claims, wherein wherein said step of trapping an animal in the housing of the animal trap is preceded by receiving said animal in said housing and detecting if said animal is a species targeted for killing by means of one or more detectors, and said step of trapping the animal in the housing is only performed if said animal is a species targeted for killing.

15. A animal trap for killing a small animal, such as a rodent, comprising:
a trap housing;
means for filling at least part of the trap housing with a gas for stunning and killing the animal inside the housing;
**characterized in that** the animal trap further comprises a foam generator for generating foam containing said gas and supplying said foam into the trap housing, said foam generator comprising:
a housing having a circumferential side wall, a first end wall and a second end wall, wherein the second end wall is at least partially formed by a perforated plate comprising a multitude of through-holes;
a spray nozzle being directed towards the second end wall from the direction of the first end wall, and an inlet for an aqueous detergent solution which is connected to said spray nozzle;
a gas outlet for supplying said gas into the housing of the foam generator, and an inlet for said gas which is connected to said gas outlet.
